# EUROPEAN PATENT APPLICATION

(11) **EP 3 001 088 A1**
(43) Date of publication of application: **30.03.2016**
(21) Application number: 14003289.7
(22) Date of filing: 23.09.2014
(51) Int. Cl.: F16M 11/04, F16M 11/14, F16M 13/00

(54) **Portable stand for a portable electronic device**

(71) Applicant: Lin, Paul, Tainan City 710 (TW)
(72) Inventor: Lin, Paul, Tainan City 710 (TW)
(74) Representative: Zeitler Volpert Kandlbinder Patent- und Rechtsanwälte Partnerschaft mbB

(57) **Abstract**

A portable stand for a portable electronic device (1) includes a handle rod (2), a clamping member (3) and a connecting mechanism (4). The connecting mechanism (4) interconnects pivotally the handle rod (2) and the clamping member (3) such that an included angle between the handle rod (2) and the clamping member (3) is variable, and the handle rod (2) and the clamping member (3) are capable of intimately abutting against each other.

## Description

The invention relates to a portable stand, and more particularly to a portable stand for a portable electronic device.

Portable devices, such as smartphones and tablet computers, are becoming ever more popular and are generally made to be relatively small and lightweight for handheld use. However, some portable devices are somewhat inconvenient to be picked up by one hand. In addition, when placed on a tabletop, a display of the portable device is parallel to the tabletop, resulting in poor posture of the user, which causes pain and soreness in the user's neck and shoulder after a while.

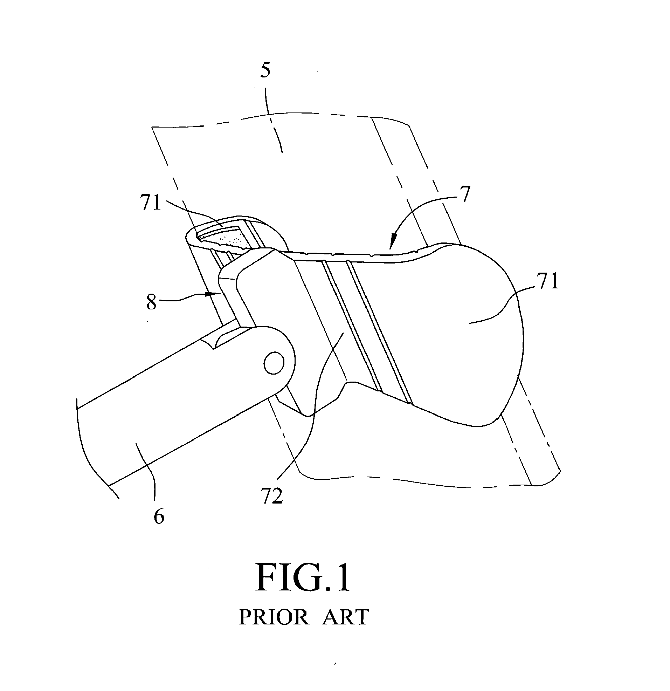

Referring to Figure 1, a conventional portable stand is illustrated for clamping a portable electronic device 5. The conventional portable stand includes a handle rod 6, a clamping plate 7 for detachably clamping the portable electronic device 5, and a connecting mechanism 8 interconnecting pivotally the handle rod 6 and the clamping plate 7 such that an included angle between the handle rod 6 and the clamping plate 7 is variable. The clamping plate 7 has two opposite clamping walls 71 for detachably clamping the portable electronic device 5, and a clamping base 72 interconnecting the clamping walls 71. When the portable electronic device 5 is clamped by the clamping plate 7, the user can easily grasp the handle rod 6 for holding the portable electronic device 5. Alternatively, the conventional portable stand allows the portable electronic device 5 to inclindedly stand on the table by adjusting the included angle between the handle rod 6 and the clamping plate 7 through the connecting mechanism 8. However, by means of the pivotal engagement between the connecting mechanism 8 and the handle rod 6, the handle rod 6 and the clamping plate 7 can never abut against each other as an angle therebetween is inevitable. As a result, the conventional portable stand may occupy a relatively large space, thereby being inconvenient for storage.

Therefore, an object of this invention is to provide a portable stand that is suited for use with a portable electronic device, and that can alleviate the aforesaid drawback of the prior art.

According to one aspect of the present invention, a portable stand for a portable electronic device includes a handle rod, a clamping member and a connecting mechanism.

The clamping member includes a longitudinal clamping body for detachably clamping the portable electronic device. The clamping body has first and second fixed jaws spaced apart from each other along a longitudinal direction of the clamping body, and a longitudinal base panel interconnecting the first and second fixed jaws.

The connecting mechanism interconnects pivotally the handle rod and the clamping member such that an included angle between the handle rod and the clamping member is variable. The connecting mechanism includes a socket member disposed on one of the handle rod and the clamping member, and an engaging member disposed on the other one of the handle rod and the clamping member. The socket member has a socket wall that defines a ball receiving space. The socket wall has at least one notch communicated with the ball receiving space. The engaging member has a ball part that is rotatably mounted in the ball receiving space and a stem that is connected to the ball part and that extends into the notch when the handle rod is folded over the clamping body.

According to another aspect of the present invention, a portable stand for a portable electronic device includes a handle rod, a clamping member and a connecting mechanism.

The clamping member includes a longitudinal clamping body for detachably clamping the portable electronic device. The clamping body has a longitudinal base panel, and at least one fixed jaw extending transversely from the base panel.

The connecting mechanism interconnects pivotally the handle rod and the clamping body such that an angle between the handle rod and the clamping body is variable.

The base panel has a longitudinal sliding recess. The clamping member further includes a sliding jaw slidable relative to the base panel. The sliding jaw has a slide part that is slidably disposed in the sliding recess, and a jaw part that extends from the slide part. The sliding jaw is movable toward the at least one fixed jaw for clamping the portable electronic device against the at least one fixed jaw.

Other features and advantages of the present invention will become apparent in the following detailed description of the embodiment with reference to the accompanying drawings, of which:
Figure 1 is a perspective view illustrating a conventional portable stand for clamping a portable electronic device;
Figure 2 is a partly exploded perspective view of an embodiment of a portable stand according to the present invention;
Figure 3 is a fragmentary partly-sectional perspective view illustrating a structural relationship between a socket member and a handle rod of the portable stand of the embodiment of this invention;
Figure 4 is a fragmentary, partly sectional front view illustrating the embodiment;
Figure 5 is a fragmentary, partly sectional side view illustrating a portable electronic device fittingly clamped by a clamping member of the portable stand;
Figure 6 is a fragmentary, partly sectional side view illustrating the clamping member clamping a smaller portable electronic device; and
Figure 7 is a fragmentary, partly sectional side view illustrating the embodiment in a state for storage.

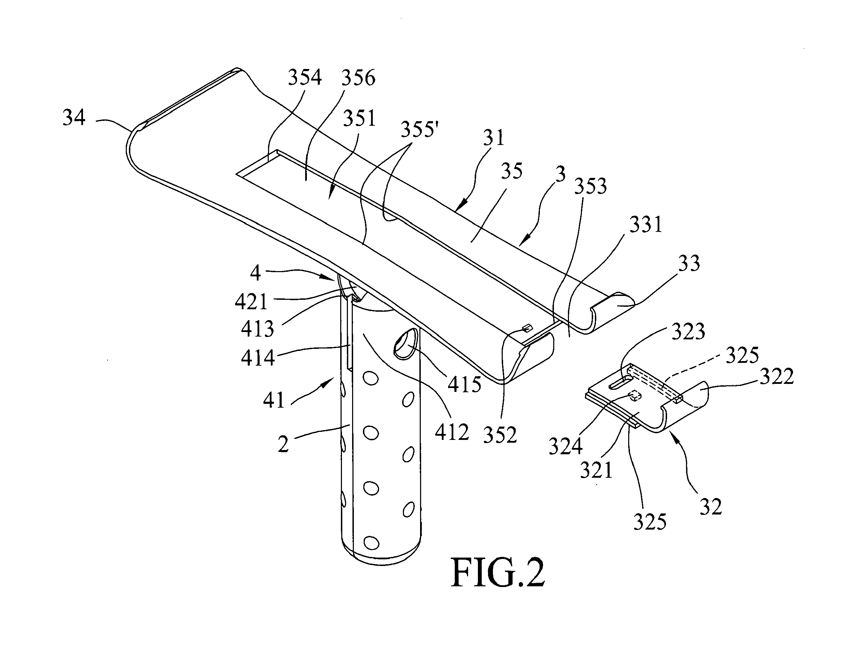

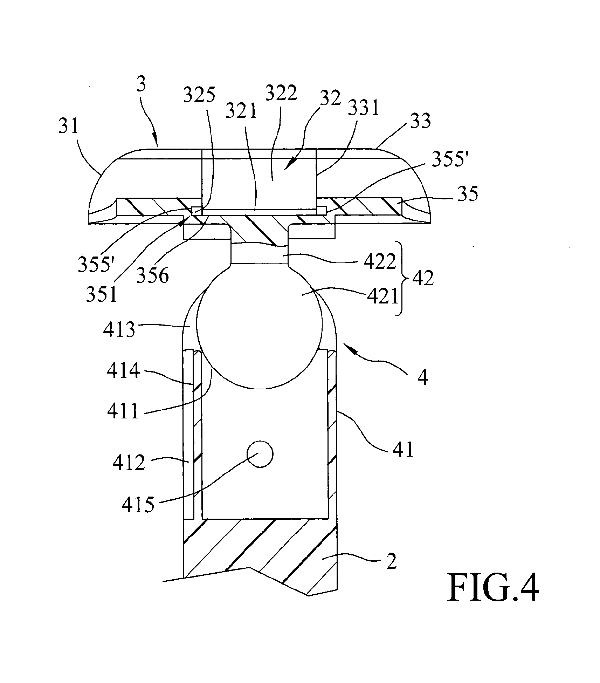

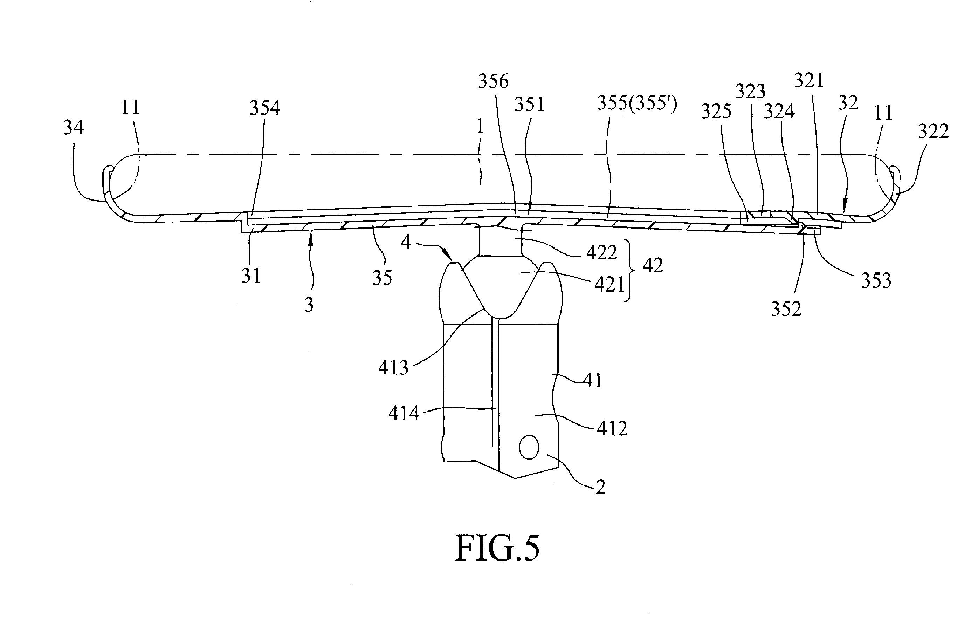

Referring to Figures 2 to 5, an embodiment of a portable stand according to the present invention is adapted for clamping a portable electronic device 1. The portable electronic device 1 is substantially rectangular and has two opposite lateral sides 11. The portable stand includes a handle rod 2, a clamping member 3, and a connecting mechanism 4 interconnecting pivotally the handle rod 2 and the clamping member 3 such that an included angle between the handle rod 2 and the clamping member 3 is variable.

The handle rod 2 is suitable for grasping by a user's hand. In this embodiment, the handle rod 2 is a substantially cylindrical body. However, the shape of the handle rod 2 is not limited to that disclosed.

The clamping member 3 includes a longitudinal clamping body 31 for detachably clamping the portable electronic device 1, and a sliding jaw 32 slidable relative to the clamping body 31. The clamping body 31 has first and second fixed jaws 33, 34 spaced apart from each other along a longitudinal direction of the clamping body 31, and a longitudinal base panel 35 interconnecting the first and second fixed jaws 33, 34. The first and second fixed jaws 33, 34 are suitable for respectively clamping the lateral sides 11 of the portable electronic device 1. The base panel 35 has a longitudinal sliding recess 351 that longitudinally extends between the first fixed jaw 33 and the second fixed jaw 34. The sliding recess 351 is indented downwardly from a top surface of the base panel 35, and has an open end 353 proximate to the first fixed jaw 33 and a close end 354 proximate to the second fixed jaw 34. In this embodiment, the clamping body 31 further has a cutout 331 that extends through the first fixed jaw 33 and an end portion of the base panel 35 adjacent to the first fixed jaw 33 and that is communicated with the sliding recess 351. Specifically, the base panel 35 further has a recess bottom wall 356 bounding a bottom end of the sliding recess 351, and a stop protrusion 352 protruding from the recess bottom wall 356 into the sliding recess 351 in proximity to the open end 353 of the sliding recess 351. In this embodiment, the sliding recess 351 is wider in proximity to the recess bottom wall 356 and narrower in proximity to a top end of the sliding recess 351, and has a lower wide recess portion 355 which is proximate to the recess bottom wall 356 and which has two engaging ends 355' that are transversely opposite to each other and that extend longitudinally.

In this embodiment, the sliding jaw 32 is slidable relative to the base panel 35. Specifically, the sliding jaw 32 is insertable into the sliding recess 351 through the cutout 331. In this embodiment, the sliding jaw 32 has a slide part 321 slidably disposed in the sliding recess 351 and a jaw part 322 extending from the slide part 321. The sliding jaw 32 is movable toward one of the first and second fixed jaws 33, 34 for clamping the portable electronic device 1 against the one of the first and second fixed jaws 33, 34. The slide part 321 of the sliding jaw 32 is slidable between the open end 353 and the close end 354. In this embodiment, the slide part 321 of the sliding jaw 32 is convexed upwardly midway between and extends downwardly and arcuatedly towards two longitudinally opposite ends of the slide part 321. Specifically, the slide part 321 of the sliding jaw 32 is formed with an indentation 323, and is provided with a limit portion 324 and two transversely opposite resilient longitudinal wings 325. The indentation 323 is indented downwardly from a top surface of the slide part 321 of the sliding jaw 32 (as shown in Figure 2), such that the user can move the sliding jaw 32 by inserting the user' s nail or a tool into the indentation 323. The limit portion 324 extends from a bottom surface of the slide part 321 into the sliding recess 351. The stop protrusion 352 is engageable with the limit portion 324 when the slide part 321 is located in the open end 353 of the sliding recess 351. The resilient longitudinal wings 325 project outwardly and respectively from lower ends of two opposite longitudinal sides of the slide part 321, and are respectively inserted into the engaging ends 355'. Each of the resilient longitudinal wings 325 is convexed resiliently and upwardly at a highest mid-point thereof and extends curvedly and downwardly from the highest mid-point to the two longitudinally opposite ends of the slide part 321. Optionally, the jaw part 322 is removable through the cutout 331.

To assemble the sliding jaw 32 with the clamping body 31, one of the two longitudinally opposite ends of the slide part 321 distal from the jaw part 322 is disposed to face the cutout 331 in advance. With the resilient longitudinal wings 325 respectively inserted into the engaging ends 355', the slide part 321 is slid in the sliding recess 351 toward the second fixed jaw 34. As the limit portion 324 of the slide part 321 reaches the stop protrusion 352 in proximity to the open end 353 of the sliding recess 351, the sliding jaw 32 has to be pushed toward the second fixed jaw 34 with a slightly greater force in order to move the limit portion 324 past the stop protrusion 352. By engagement of the limit portion 324 with the stop protrusion 352, the sliding jaw 32 is prevented from departing outwardly from the cutout 331, and thus movably limited between the close end 354 and the open end 353. Specifically, in this embodiment, a height of the highest mid-point from a lowest point of each of the resilient longitudinal wings 325 is greater than a height of a top end of each of the engaging ends 355' from the recess bottom wall 356. When the resilient longitudinal wings 325 are respectively inserted into the engaging ends 355' , each of the resilient longitudinal wings 325 resiliently abuts against the top end of the respective engaging end 355' and the limit portion 324 abuts against the recess bottom wall 356, so that the slide part 321 of the sliding jaw 32 is hamperedly slidable between the open end 353 and the close end 354 in the sliding recess 351.

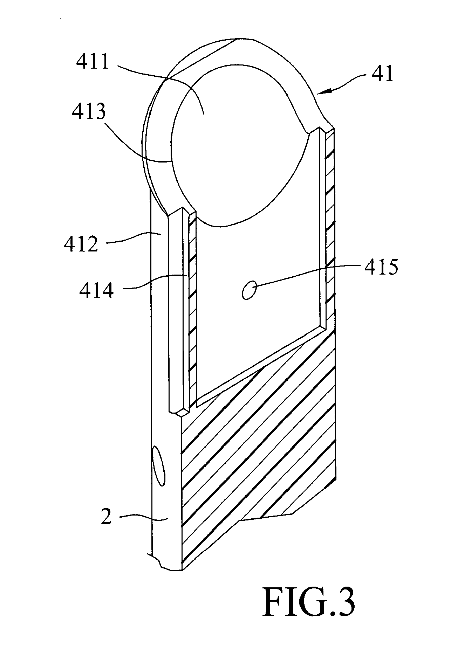

The connecting mechanism 4 includes a socket member 41 disposed on a top end of an upper part of the handle rod 2 and an engaging member 42 disposed on a bottom side of the base panel 35. The socket member 41 is formed in one-piece with the handle rod 2. However, the connecting mechanism 4 is not limited to this disclosure. For example, the socket member 41 can be disposed on the clamping member 3 and the engaging member 42 can be disposed on the handle rod 2. In this embodiment, the socket member 41 has a socket wall 412 that is disposed on the top end of the upper part of the handle rod 2 and that defines a ball receiving space 411. The socket wall 412 has two spaced apart notches 413 (only one is visible) communicated with the ball receiving space 411. In addition, the handle rod 2 has a slit 414 that communicates with the ball receiving space 411 and the notches 413, and that extends downwardly from the ball receiving space 411 and the top end of the upper part of the handle rod 2 into the upper part of the handle rod 2 to split the upper part of the handle rod 2. Each of the notches 413 decreases in width to its bottom end from a top open end of the socket wall 412 and is rounded at its bottom end. In such a condition, each of the notches 413 has a substantially V-shaped contour. In this embodiment, the engaging member 42 has a ball part 421 that is rotatably mounted in the ball receiving space 411 and a stem 422 that is connected to the ball part 421 and that extends into one of the notches 413 when the handle rod 2 is folded over the clamping body 31. Specifically, the slit 414 has a width smaller than a diameter of the stem 422. In this embodiment, the stem 422 is a circular rod and the diameter of the stem 422 is smaller than or equal to the maximum width of each of the notches 413. When the socket member 41 is assembled with the handle rod 2, the slit 414 provides flexibility to the socket wall 412, such that the ball part 421 may be inserted into and received in the ball receiving space 411. Preferably, the handle rod 2 has a threaded hole 415 that extends through the slit 414 (see Figs. 2 and 3). As such, a fastener (not shown) can be threadedly inserted into the threaded hole 415 to shorten the width of the slit 414, thereby decreasing the size of the ball receiving space 411. Accordingly, the ball part 421 can be tightly mounted in the ball receiving space 411 and be hamperedly and steplessly rotatable therein. While the socket member 41 has the two notches 413 and the handle rod 2 has the slit 414, the number of the notches 413 and the slit 414 are not limited in this disclosure. For example, the socket wall 412 can have only one notch 413.

In actual use, the portable electronic device 1 is disposed between the first and second fixed jaws 33, 34. If the two lateral sides 11 of the portable electronic device 1 respectively abut against the first and second fixed jaws 33, 34, the slide part 321 of the sliding jaw 32 is disposed at the open end 353 of the sliding recess 351. In such a manner, the jaw part 322 of the sliding jaw 32 is disposed in the cutout 331 and substantially flush with the first fixed jaw 33. As a result, the first fixed jaw 33, the second fixed jaw 34 and the jaw part 322 of the sliding jaw 32 cooperate to clamp the portable electronic device 1.

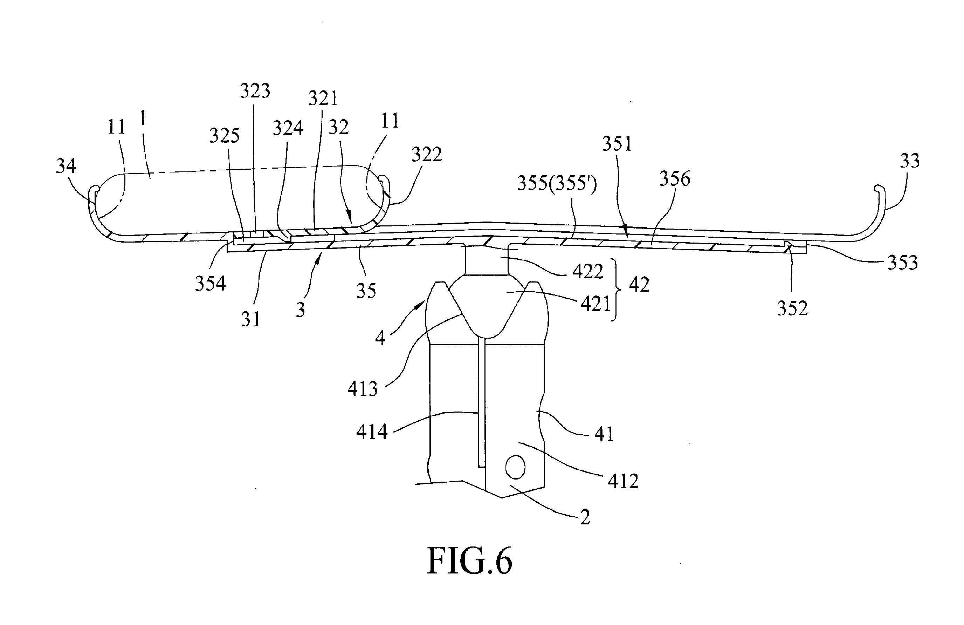

Referring to Figure 6, if the two lateral sides 11 of the portable electronic device 1 has a distance smaller than that between the first and second fixed jaws 33, 34, the sliding jaw 32 is pushed to move toward the close end 354 until the jaw part 322 thereof abuts against one of the lateral sides 11 of the portable electronic device 1. As such, the second fixed jaw 34 and the jaw part 322 of the sliding jaw 32 cooperatively clamp the portable electronic device 1. Accordingly, the clamping member 3 is suited for firmly clamping the portable electronic devices 1 of different sizes.

After the clamping member 3 clamps the portable electronic device 1, the user can grasp the handle rod 2 to adjust the included angle between the clamping member 3 and the handle rod 2 in a stepless manner. However, since the ball part 421 is hamperedly rotatable in the ball receiving space 411, the user has to slightly force the handle rod 2 in order to adjust the included angle between the clamping member 3 and the handle rod 2. With the portable electronic device 1 clamped by the clamping member 3, an adjustment of the included angle between the clamping member 3 and the handle rod 2 facilitates adjustment of an angle of view of the portable electronic device 1. In addition, the portable electronic device 1 can inclinedly stand on the table (not show) with the assistance of the handle rod 2 for easy viewing.

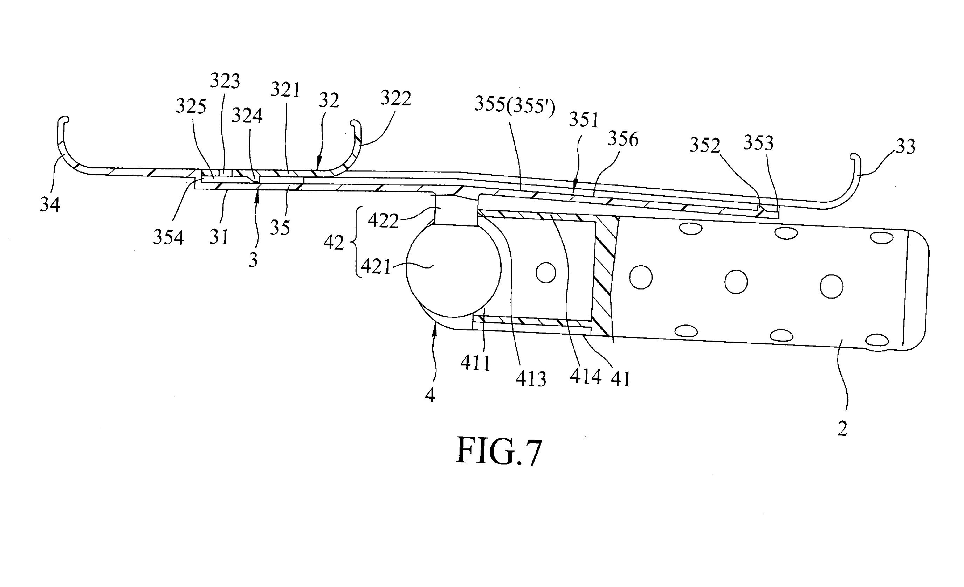

With reference to Figures 2, 6 and 7, to convert the portable stand from an unfolded state as shown in Fig. 6 to a folded state as shown in Fig. 7, the clamping member 3 is first rotated relative to the handle rod 2 such that the longitudinal clamping body 31 is moved parallel to the notches 413 and the slit 414 of the handle rod 2. When the stem 422 of the engaging member 42 is moved to be close to and then extends into one of the notches 413, the base panel 35 of the clamping member 3 is laid over a longitudinal side of the handle rod 2. In other words, the handle rod 2 is folded over the longitudinal clamping body 31 of the clamp 3 in a parallel manner, thereby reducing the occupied space for easy storage.

To sum up, by virtue of the stem 422 of the engaging member 42 extending into one of the notches 413, the clamping member 3 and the handle rod 2 can be folded over each other in a parallel manner to reduce the occupied space for easy storage. Furthermore, since the sliding jaw 32 is hamperedly slidable between the first and second fixed jaws 33, 34, the jaw part 322 of the sliding jaw 32 can be moved to cooperate with the second fixed jaw 34 to clamp a relatively small portable electronic device 1. By virtue of the structure of the clamping body 31 and the sliding jaw 32, the portable electronic devices 1 of various sizes can be firmly clamped by the clamping member 3.

## Claims

1. A portable stand for a portable electronic device (1), said portable stand **characterized by**:
a handle rod (2);
a clamping member (3) including a longitudinal clamping body (31) for detachably clamping the portable electronic device (1), said clamping body (31) having first and second fixed jaws (33, 34) that are spaced apart from each other along a longitudinal direction of said clamping body (31), and a longitudinal base panel (35) that interconnects said first and second fixed jaws (33, 34); and
a connecting mechanism (4) interconnecting pivotally said handle rod (2) and said clamping member (3) such that an included angle between said handle rod (2) and said clamping member (3) is variable, said connecting mechanism (4) including a socket member (41) that is disposed on one of said handle rod (2) and said clamping member (3), and an engaging member (42) that is disposed on the other one of said handle rod (2) and said clamping member (3), said socket member (41) having a socket wall (412) that defines a ball receiving space (411), said socket wall (412) having at least one notch (413) that is communicated with said ball receiving space (411), said engaging member (42) having a ball part (421) that is rotatably mounted in said ball receiving space (411) and a stem (422) that is connected to said ball part (421) and that extends into said notch (413) when said handle rod (2) is folded over said clamping body (31).

2. The portable stand as claimed in Claim 1, **characterized in that** said socket member (41) is disposed on a top end of an upper part of said handle rod (2), and said engaging member (42) is disposed on a bottom side of said base panel (35).

3. The portable stand as claimed in Claim 1, **characterized in that** said at least one notch (413) decreases in width to a bottom end thereof from a top open end of said socket wall (412) and is rounded at said bottom end thereof.

4. The portable stand as claimed in Claim 1, **characterized in that** said base panel (35) has a longitudinal sliding recess (351) longitudinally extending between said first fixed jaw (33) and said second fixed jaw (34), said clamping member (3) further including a sliding jaw (32) slidable relative to said base panel (35), said sliding jaw (32) having a slide part (321) that is slidably disposed in said sliding recess (351) and a jaw part (322) that extends from said slide part (321), said sliding jaw (32) being movable toward one of said first and second fixed jaws (33, 34) for clamping the portable electronic device (1) against said one of said first and second fixed jaws (33, 34).

5. The portable stand as claimed in Claim 4, **characterized in that** said sliding recess (351) is indented downwardly from a top surface of said base panel (35), and has an open end proximate to said first fixed jaw (33) and a close end (354) proximate to said second fixed jaw (34), said slide part (321) of said sliding jaw (32) being slidable between said open end (353) and said close end (354), said clamping body (31) further having a cutout (331) that extends through said first fixed jaw (33) and an end portion of said base panel (35) adjacent to said first fixed jaw (33) and that is communicated with said sliding recess (351), said sliding jaw (32) being insertable into said sliding recess (351) through said cutout (331).

6. The portable stand as claimed in Claim 5, **characterized in that** said slide part (321) is provided with a limit portion (324) extending from a bottom surface of said slide part (321) into said sliding recess (351), said base panel (35) further having a recess bottom wall (356) that bounds a bottom end of said sliding recess (351), and a stop protrusion (352) that protrudes from said recess bottom wall (356) into said sliding recess (351) in proximity to said open end (353) of said sliding recess (351) and that is engageable with said limit portion (324) when said slide part (321) is located in said open end (353) of said sliding recess (351).

7. The portable stand as claimed in Claim 5, **characterized in that** said sliding recess (351) is wider in proximity to said recess bottom wall (356) and narrower in proximity to a top end of said sliding recess (351), and has a lower wide recess portion (355) which is proximate to said recess bottom wall (356) and which has two engaging ends (355') that are transversely opposite to each other and that extend longitudinally, said slide part (321) of said sliding jaw (32) being convexed upwardly midway between and extending downwardly and arcuatedly to two longitudinally opposite ends of said slide part (321), said slide part (321) having two transversely opposite resilient longitudinal wings (325) that project outwardly and respectively from two opposite longitudinal sides of said slide part (321) and that are respectively inserted into said engaging ends (355'), each of said resilient longitudinal wings (325) being convexed resiliently and upwardly at a highest mid-point thereof and extending curvedly and downwardly from said highest mid-point to said two longitudinally opposite ends of said slide part (321).

8. The portable stand as claimed in Claim 7, **characterized in that** a height of said highest mid-point from a lowest point of each of said resilient longitudinal wings (325) is greater than a height of a top end of each of said engaging ends from said recess bottom wall (356).

9. The portable stand as claimed in Claim 1, **characterized in that** said at least one notch (413) includes two spaced-apart ones of said notches (413) communicated with said ball receiving space (411).

10. The portable stand as claimed in Claim 2, **characterized in that** said handle rod (2) has a slit (414) that communicates with said ball receiving space (411) and said notch (413), and that extends downwardly from said ball receiving space (411) and said top end of said upper part of said handle rod (2) into said upper part of said handle rod (2) to split said upper part of said handle rod (2), said slit (414) having a width smaller than a diameter of said stem (422).

11. A portable stand for a portable electronic device (1), said portable stand **characterized by**:
a handle rod (2);
a clamping member (3) including a longitudinal clamping body (31) for detachably clamping the portable electronic device (1), said clamping body (31) having a longitudinal base panel (35), and at least one fixed jaw (33 or 34) extending transversely from said base panel (35); and
a connecting mechanism (4) interconnecting pivotally said handle rod (2) and said clamping body (31) such that an angle between said handle rod and said clamping body (31) is variable;
**characterized in that** said base panel (35) has a longitudinal sliding recess (351), said clamping member (3) further including a sliding jaw (32) that is slidable relative to said base panel (35), said sliding jaw (32) having a slide part (321) that is slidably disposed in said sliding recess (351) and a jaw part (322) that extends from said slide part (321), said sliding jaw (32) being movable toward said at least one fixed jaw (33 or 34) for clamping the portable electronic device (1) against said at least one fixed jaw (33 or 34).

12. The portable stand as claimed in Claim 11, **characterized in that** said sliding recess (351) is indented downwardly from a top surface of said clamping panel (35), and has a close end (354) proximate to said at least one fixed jaw (33 or 34), and an open end (353) opposite to said close end (354), said slide part (321) of said sliding jaw (32) being slidable between said open end (353) and said close end (354).

13. The portable stand as claimed in Claim 12, **characterized in that** said at least one fixed jaw (33 or 34) includes first and second fixed jaws (33, 34) that are longitudinally spaced apart from each other, said clamping body (31) further having a cutout (331) that extends through said first fixed jaw (33) and an end portion of said base panel (35) adjacent to said first fixed jaw (33) and that is communicated with said sliding recess (351), said sliding jaw (32) being insertable into said sliding recess (351) through said cutout (331).

14. The portable stand as claimed in Claim 13, **characterized in that** said slide part (321) is provided with a limit portion (324) extending from a bottom surface of said slide part (321) into said sliding recess (351), said base panel (35) further having a recess bottom wall (356) that bounds a bottom end of said sliding recess (351), and a stop protrusion (352) that protrudes from said recess bottom wall (356) into said sliding recess (351) in proximity to said open end (353) of said sliding recess (351) and that is engageable with said limit portion (324) when said slide part (321) is proximate to said open end of said sliding recess (351).

15. The portable stand as claimed in Claim 14, **characterized in that** said sliding recess (351) is wider in proximity to said recess bottom wall (0356) and narrower in proximity to a top end of said sliding recess (351), and has a lower wide recess portion (355) which is proximate to said recess bottom wall (356) and which has two engaging ends (355') that are transversely opposite to each other and that extend longitudinally, said slide part (321) of said sliding jaw (32) being convexed upwardly midway between and extending downwardly and arcuatedly to two longitudinally opposite ends of said slide part (321), said slide part (321) having two transversely opposite resilient longitudinal wings (325) that project outwardly and respectively from two opposite longitudinal sides of said slide part (321) and that are respectively inserted into said engaging ends (355'), each of said resilient longitudinal wings (325) being convexed resiliently and upwardly at a highest mid-point thereof and extending curvedly and downwardly from said highest mid-point to said two longitudinally opposite ends of said slide part (321).

16. The portable stand as claimed in Claim 15, **characterized in that** a height of said highest mid-point from a lowest point of each of said resilient longitudinal wings (325) is greater than a height of a top end of each of said engaging ends from said recess bottom wall (356).
